# EUROPEAN PATENT APPLICATION

(11) **EP 2 423 474 A2**
(43) Date of publication of application: **29.02.2012**
(21) Application number: 10157834.2
(22) Date of filing: 25.03.2010
(51) Int. Cl.: F01K 25/08

(54) **Tri-generation system using cascading organic rankine cycle**

(30) Priority: 30.03.2009 US 413920; 12.11.2009 US 616827
(71) Applicant: General Electric Company, Schenectady, NY 12345 (US)
(72) Inventor: Ast, Gabor, 85478 Garching (DE); Frey, Thomas Johannes, 85478 Garching (DE); Huck, Pierre Sebastien, 85478 Garching (DE); Kopecek, Herbert, 85478 Garching (DE)
(74) Representative: Bedford, Grant Richard

(57) **Abstract**

A tri-generation system 10 comprises a heat generation system, a first rankine cycle system 12 , a second rankine cycle system 14, a cascaded heat exchange unit 24, at least one first heat exchanger 20 coupled to the second rankine cycle system for heating a third fluid, at least one second heat exchanger 24 disposed at one or more locations in the first rankine cycle system for heating a fourth fluid, and an absorption chiller coupled to the at least one first heat exchanger and the at least one second heat exchanger for receiving the heated third fluid and the heated fourth fluid. The first rankine cycle system 12 is coupled to a first heat source and configured to circulate a first working fluid to remove heat from the first heat source. The second rankine cycle system 14 is coupled to at least one second heat source and configured to circulate a second working fluid to remove heat from the at least one second heat source. The first and second working fluids are circulated in heat exchange relationship through the cascaded heat exchange unit 24 for condensation of the first working fluid in the first rankine cycle system and evaporation of the second working fluid in the second rankine cycle system 14.

## Description

The invention relates generally to power generation systems and, more particularly, to a tri-generation system using waste heat recovery and cascading organic rankine cycle for generating electricity, heating, and cooling/refrigeration.

Enormous amounts of waste heat are generated by a wide variety of industrial and commercial processes and operations. Example sources of waste heat include heat from space heating assemblies, steam boilers, engines, and cooling systems. When waste heat is low grade, such as waste heat having a temperature of heat below 840 degrees Fahrenheit, for example, conventional heat recovery systems do not operate with sufficient efficiency to make recovery of energy cost-effective. The net result is that vast quantities of waste heat are simply dumped into the atmosphere, ground, or water.

Some power generation systems provide better reliability and off-grid operation with alternate fuels such as biogas or landfill gas, with examples being gas turbines and combustion engines such as microturbines and reciprocating engines. Combustion engines may be used to generate electricity using fuels such as gasoline, natural gas, biogas, plant oil, and diesel fuel. However, atmospheric emissions such as nitrogen oxides and particulates may be emitted.

One method to generate electricity from the waste heat of a combustion engine without increasing the output of emissions is to apply a bottoming rankine cycle. A fundamental rankine cycle typically includes a turbo generator, an evaporator/boiler, a condenser, and a liquid pump. In another method to generate electricity from waste heat, single cycle system or two-cycle systems are used in heat recovery applications with waste heat sources of different temperature levels. Single-cycle configurations collect heat from the different waste heat locations in a serial arrangement of heat exchangers with an intermediate heating fluid. In two-cycle configurations, the hot heat source heats a high-boiling point liquid in a top loop, and the cold heat source heats a low-boiling point liquid in a separate bottom loop. In another conventional system provided to generate electricity from waste heat, a cascaded organic rankine cycle system for utilization of waste heat includes a pair of organic rankine cycle systems. The cycles are combined, and the respective organic working fluids are chosen such that the organic working fluid of the first organic rankine cycle is condensed at a condensation temperature that is above the boiling point of the organic working fluid of the second organic cycle.

Most of the conventional power generation systems discussed above are used to exclusively produce electricity and provide less flexibility between electricity and heat produced. Varying needs for electricity, heat, and cooling or refrigeration cannot be met by conventional power generation systems. Such varying needs are generally met by separate installations, leading to reduced overall efficiency. It would therefore be desirable to a tri-generation system that efficiently caters to varying needs of electricity, heat, and cooling or refrigeration while employing waste heat recovery.

In accordance with one embodiment disclosed herein, a tri-generation system comprises a heat generation system, a first rankine cycle system, a second rankine cycle system, a cascaded heat exchange unit, at least one first heat exchanger coupled to the second rankine cycle system for heating a third fluid, at least one second heat exchanger disposed at one or more locations in the first rankine cycle system for heating a fourth fluid, and an absorption chiller coupled to the at least one first heat exchanger and the at least one second heat exchanger for receiving the heated third fluid and the heated fourth fluid. The heat generation system comprises at least two separate heat sources having different temperatures. The first rankine cycle system comprises a first expander. The first rankine cycle system is coupled to a first heat source among the at least two separate heat sources and configured to circulate a first working fluid to remove heat from the first heat source. The second rankine cycle system comprised a second expander. The second rankine cycle system is coupled to at least one second heat source among the at least two separate heat sources and configured to circulate a second working fluid to remove heat from the at least one second heat source. The at least one second heat source comprising a lower temperature heat source than the first heat source. The first and second working fluids are circulated in heat exchange relationship through the cascaded heat exchange unit for condensation of the first working fluid in the first rankine cycle system and evaporation of the second working fluid in the second rankine cycle system. At least one generator unit is coupled to the first expander and the second expander.

In accordance with another embodiment disclosed herein, a tri-generation system comprises a heat generation system, a first rankine cycle system, a second rankine cycle system, a cascaded heat exchange unit, at least one first heat exchanger coupled to the second rankine cycle system for heating a third fluid, at least one second heat exchanger disposed at one or more locations in the first rankine cycle system for heating a fourth fluid, an absorption chiller coupled to the at least one first heat exchanger and the at least one second heat exchanger for receiving the heated third fluid and the heated fourth fluid, and one or more control valves. The heat generation system comprised at least two separate heat sources having different temperatures. The first organic rankine cycle system comprises a first expander, wherein the first rankine organic cycle system is coupled to a first heat source among the at least two separate heat sources and configured to circulate a first organic working fluid to remove heat from the first heat source. The second organic rankine cycle system comprises a second expander and a condenser. The condenser is coupled to at least one second heat source among the at least two separate heat sources and configured to circulate a second organic working fluid to remove heat from the at least one second heat source. The at least one second heat source comprising a lower temperature heat source than the first heat source. The first and second working fluids are circulated in heat exchange relationship in the cascaded heat exchange unit for condensation of the first organic working fluid in the first rankine cycle system and evaporation of the second organic working fluid in the second rankine cycle system. At least one generator unit is coupled to the first expander and the second expander. The absorption chiller rejects a portion or all of the condensed third fluid back to the second rankine cycle system. The control valves control flow of the first working fluid into the at least one first heat exchanger and the cascaded heat exchange unit, to control flow of the second working fluid into the at least one second heat exchanger, or combination thereof.

In accordance with another embodiment disclosed herein, a tri-generation system comprises a heat generation system, a first organic rankine cycle system, a second organic rankine cycle system, a cascaded heat exchange unit, at least one first heat exchanger disposed coupled to the second rankine cycle system for heating a third fluid, at least one second heat exchanger disposed at one or more locations in the first rankine cycle system for heating a fourth fluid, an absorption chiller coupled to the at least one heat exchanger for receiving the heated third fluid and the heated fourth fluid, one or more control valves, and a partial evaporator. The heat generation system comprises at least two separate heat sources having different temperatures. The heat generation system includes a combustion engine or a gas turbine for producing electricity, mechanical power, or combination thereof. The first organic rankine cycle system comprises a first expander and an evaporator. The first rankine organic cycle system is coupled to a first heat source among the at least two separate heat sources and configured to circulate a first organic working fluid to remove heat from the first heat source. The second organic rankine cycle system comprises a second expander and a condenser. The condenser is coupled to at least one second heat source among the at least two separate heat sources and configured to circulate a second organic working fluid to remove heat from the at least one second heat source. The at least one second heat source comprises a lower temperature heat source than the first heat source. The at least one second heat source comprises an oil heat exchanger, an engine jacket, a water jacket heat exchanger, a lower temperature intercooler, a higher temperature intercooler, or combinations thereof. The first and second working fluids are circulated through the cascaded heat exchange unit in heat exchange relationship for condensation of the first organic working fluid in the first rankine cycle system and evaporation of the second organic working fluid in the second rankine cycle system. The absorption chiller rejects a portion or all of the condensed third fluid back to the second rankine cycle system. At least one generator unit coupled to the first expander and the second expander. The control valves control flow of the first working fluid into the at least one first heat exchanger and the cascaded heat exchange unit, to control flow of the second working fluid into the at least one second heat exchanger, or combination thereof. The partial evaporator partially evaporates the second working fluid before entering the cascaded heat exchange unit. The condenser is coupled to the oil heat exchanger, the engine jacket, the water jacket heat exchanger, the engine jacket, the lower temperature intercooler, the higher temperature intercooler, or combinations thereof through the partial evaporator.

Various features, aspects, and advantages of the present invention will become better understood when the following detailed description is read with reference to the accompanying drawings in which like characters represent like parts throughout the drawings, wherein:
FIG. 1 illustrates an exemplary embodiment of the tri-generation system in accordance with aspects disclosed herein.
FIG. 2 illustrates another exemplary embodiment of the tri-generation system in accordance with aspects disclosed herein.
FIG. 3 illustrates the tri-generation system operating in an exemplary operational mode in accordance with aspects disclosed herein.
FIG. 4 shows exemplary operational modes of the tri-generation system in a tabular form in accordance with aspects disclosed herein.

Embodiments disclosed herein include a tri-generation system using waste heat recovery and cascading organic rankine cycle. The system has at least two integrated rankine cycle systems coupled to at least two separate heat sources, respectively, having different temperatures. The first rankine cycle system is coupled to a first heat source and configured to circulate a first working fluid. The second rankine cycle system is coupled to at least one second heat source and configured to circulate a second working fluid. The second heat source includes a lower temperature heat source than the first heat source. The tri-generation system also includes a cascaded heat exchange unit, one or more heat exchangers, and an absorption chiller coupled to the heat exchangers. The tri-generation system caters to varying needs of electricity, heating, and cooling or refrigeration. Although the tri-generation system is described with reference to combustion engines, the system is also applicable to other heat generation systems such as gas turbines, geothermal, solar thermal, or industrial and residential heat sources.

As a preliminary matter, the definition of the term "or" for the purpose of the following discussion and the appended claims is intended to be an inclusive "or." That is, the term "or" is not intended to differentiate between two mutually exclusive alternatives. Rather, the term "or" when employed as a conjunction between two elements is defined as including one element by itself, the other element itself, and combinations and permutations of the elements. For example, a discussion or recitation employing the terminology "A" or "B" includes: "A" by itself, "B" by itself, and any combination thereof, such as "AB" and "BA." Furthermore, it is of note that the present discussion relates to exemplary embodiments, and the appended claims should not be limited to the embodiments discussed.

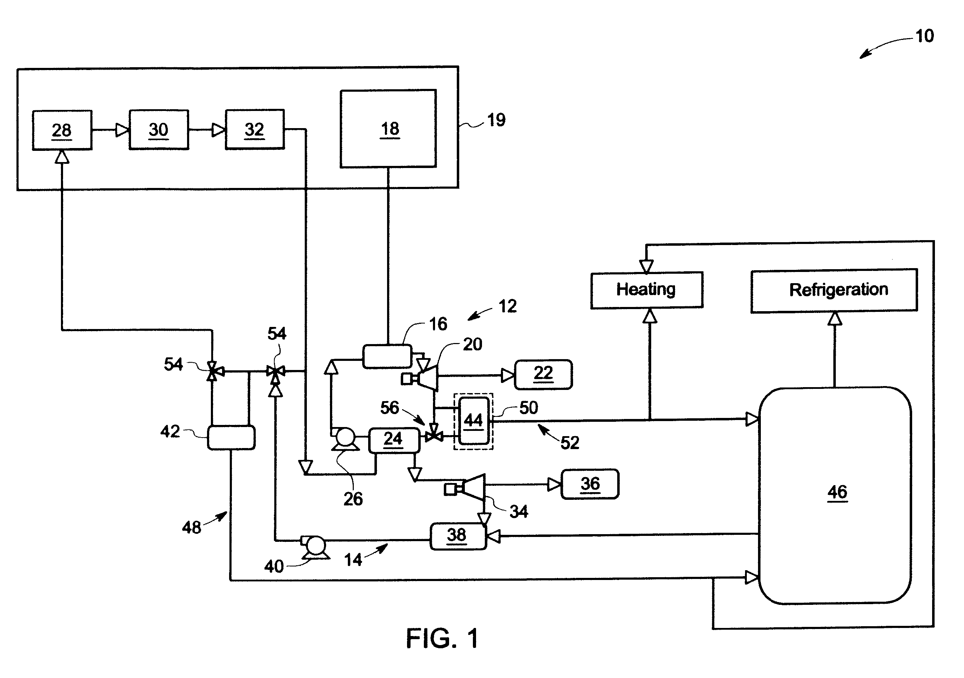

Referring to FIG. 1, a tri-generation system 10 is illustrated in accordance with an exemplary embodiment of the present invention. The tri-generation system includes a first organic rankine cycle system 12 (top cycle) and a second organic rankine cycle system 14 (bottom cycle). A first organic working fluid is circulated through the first organic rankine cycle system 12. The first organic working fluid may include cyclohexane, cyclopentane, thiophene, ketones, aromatics, or combinations thereof. The first organic rankine cycle system 12 includes an evaporator 16 coupled to a first heat source 18, for example an exhaust unit of a heat generation system 19 (for example, an engine). The heat generation system can be a combustion engine, a gas turbine, or combination thereof that produces electricity, mechanical power, or combination thereof. In one example, the temperature of the exhaust unit of the engine may be in the temperature range of 400 to 500 degrees Celsius. The evaporator 16 receives heat from the exhaust gas generated from the first heat source 18 and generates a first organic working fluid vapor. The first organic working fluid vapor is passed through a first expander 20 to drive a first generator unit 22. After passing through the first expander 20, the first organic working fluid vapor at a relatively lower pressure and lower temperature is passed through the cascaded heat exchange unit 24. The first organic working fluid vapor is condensed into a liquid, which is then pumped via a pump 26 to the evaporator 16. The cycle may then be repeated.

The cascaded heat exchange unit 24 is used both as a condenser for the first organic rankine cycle system 12 and as an evaporator for the second organic rankine cycle system 14. A second organic working fluid is circulated through the second organic rankine cycle system 14. The second organic working fluid may include propane, butane, pentafluoro-propane, pentafluoro-butane, pentafluoro-polyether, oil, or combinations thereof. It should be noted herein that list of first and second organic working fluids are not inclusive and other organic working fluids applicable to organic rankine cycles are also envisaged. In certain other exemplary embodiments, the first or second organic working fluid includes a binary fluid. The binary fluid may include cyclohexane-propane, cyclohexane-butane, cyclopentane-butane, or cyclopentane-pentafluoropropane, for example. Cascaded heat exchange unit 24 may be coupled to any one or more of a plurality of second heat sources such as an intercooler 28, an oil heat exchanger 30, and a cooling water jacket heat exchanger 32 being coupled either in series or parallel. Such second heat sources are also typically coupled to the engine. It should be noted herein that the second heat source includes a lower temperature heat source than the first heat source. It should be noted that in other exemplary embodiments, the first and second heat sources may include other multiple low-grade heat sources such as gas turbines with intercoolers. The cascaded heat exchange unit 24 receives heat from the first organic working fluid and generates a second organic working fluid vapor. The second organic working fluid vapor is passed through a second expander 34 to drive a second generator unit 36. In certain other exemplary embodiments, the first expander 20 and the second expander 34 are coupled to a single generator unit. The first and second generator units generate electricity.

In an exemplary embodiment, neither of the first and second organic working fluids are expanded below the atmospheric pressure, and the boiling point temperature of the first organic working fluid is below the average temperature of the second heat source. After passing through the second expander 34, the second organic working fluid vapor at lower pressure and lower temperature is passed through a condenser 38. The second organic working fluid vapor is condensed into a liquid, which is then pumped via a pump 40 to the second heat sources. In the illustrated embodiment, the second organic working fluid is pumped sequentially via the intercooler 28, the oil heat exchanger 30, and the cooling water jacket heat exchanger 32. The cycle may then be repeated.

The cascaded organic rankine cycle system facilitates heat recovery over a temperature range that is too large for a single organic rankine cycle system to accommodate efficiently. In one embodiment, the intercooler 28, the oil heat exchanger 30, and the cooling water jacket heat exchanger 32 are coupled along a single cooling loop in which the second organic working fluid is heated and partially evaporated. The illustrated layout of the second heat sources facilitates effective heat removal from the plurality of lower temperature engine heat sources. This increases the effectiveness of the cooling systems and provides effective conversion of waste heat into electricity. In another exemplary embodiment of the present invention, the heat generation system may include a gas turbine system. Steam may be circulated through the top cycle and the second organic working fluid may be circulated through the bottom cycle. Steam is condensed and passed in heat exchange relationship with the second organic working fluid through the cascaded heat exchange unit 24.

The tri-generation system 10 further includes at least one first heat exchanger 42, at least one second heat exchanger 44, and an absorption chiller 46. The first heat exchanger 42 is disposed at one or more locations in the second rankine cycle system. In one embodiment, the first heat exchanger 42 is disposed between a second heat source 28 and the absorption chiller 46. The second organic working fluid is circulated in heat exchange relationship with a third fluid 48 through the first heat exchanger 42, for heating the third fluid. The third fluid 48 can include water, or water mixed with anti-corrosive agent, or water mixed with anti-freezing agent.

One or more second heat exchangers 44 are disposed in the first organic rankine cycle system 12. In one embodiment, the second heat exchanger 44 is disposed at a location 50 between the first expander 20 and the cascaded heat exchange unit 24 of the first organic rankine cycle system 12. The first organic working fluid is circulated in heat exchange relationship with a fourth fluid 52 through the second heat exchanger 44, for heating the fourth fluid 52. The fourth fluid 52 can include water, or water mixed with anti-corrosive agent, or water mixed with anti-freezing agent.

The absorption chiller 46 is coupled to the first heat exchanger 42 for receiving the heated third fluid 48. The absorption chiller 46 is also coupled to the second heat exchanger 44 for receiving the heated fourth fluid 48. The tri-generation system 10 further includes control valves 54 and 56 to control the flow of the first working fluid and the second working fluid. First control valves 54 control flow of the second working fluid into the first heat exchanger 42. A second control valve 56 is situated in the first rankine cycle system 12 to control flow of the first working fluid into the second heat exchanger 44 and the cascaded heat exchange unit 24. In one embodiment, the control valves 54 and 56 are three-way control valves.

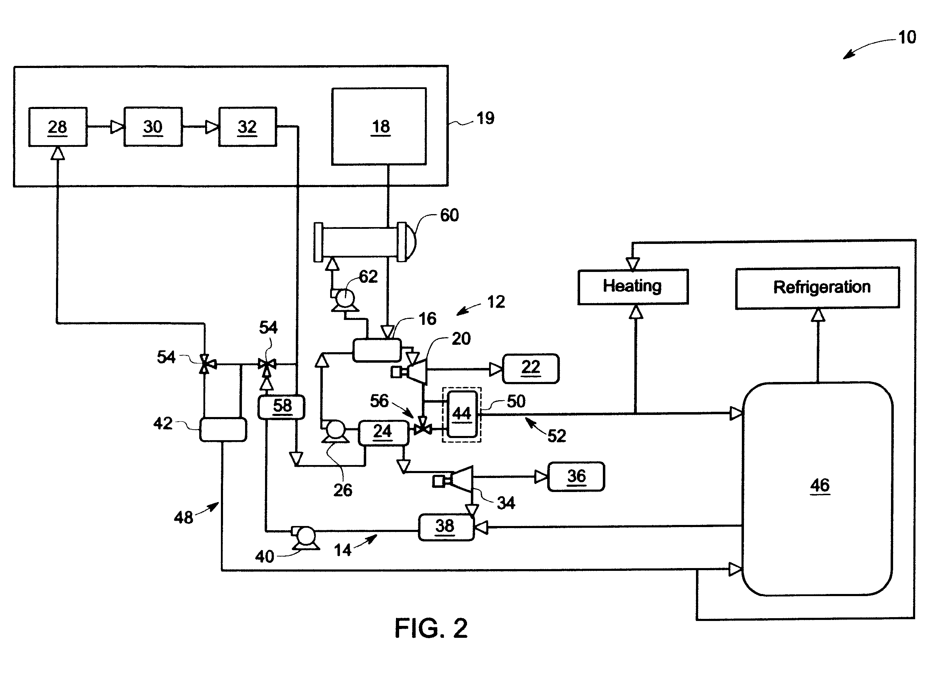

Referring to FIG. 2, the tri-generation system is illustrated in accordance with another exemplary embodiment of the present invention. As discussed above in reference to FIG. 1, the tri-generation system includes a first organic rankine cycle system 12 (top cycle) and a second organic rankine cycle system 14, a cascaded heat exchange unit 24, a first heat exchanger 42, a second heat exchanger 44, and an absorption chiller 46. The tri-generation system 10 further includes a partial evaporator 58 in this embodiment. The cascaded heat exchange unit 24 is coupled to a plurality of second heat sources such as the intercooler 28, the oil heat exchanger 30, and an engine jacket 32 via a partial evaporator 58. The partial evaporator 58 receives heat from a cooling water loop that collects heat from the oil heat exchanger 30, the engine jacket 62, and the intercooler 28 and generates a partially evaporated second organic working fluid two-phase stream. The second organic working fluid stream is passed through the cascaded heat exchange unit 24 for complete evaporation or even superheating of the second organic working fluid. Also, the evaporator 16 is coupled to the first heat source 18, i.e. the exhaust unit of the engine, via a thermal oil heat exchanger 60. The thermal oil heat exchanger 60 is used to heat thermal oil to a relatively higher temperature using exhaust gas of the engine. The thermal oil is then pumped back from the evaporator 16 to the thermal oil heat exchanger 60 using a pump 62.

The tri-generation system 10, as described in FIGS. 1 and 2, can be operated in several modes to cater to varying demands. The tri-generation system 10 can provide of varying levels of power, heating, and refrigeration or cooling depending on customer's demand and external conditions such as weather or seasons. The first and second organic rankine cycles produce electricity. In the case where the engine 19 (such as a gas turbine or a combustion engine) is an electricity producer, the first and second organic rankine cycles 12 and 14 produce additional electricity. The first organic rankine cycle also provides heat via the second heat exchanger 44. Heat can also be extracted from the first heat exchanger 42 directly from the second heat sources. The control valves 54 and 56 control circulation of the first working fluid and the second working fluid into the second heat exchanger 44 and the first heat exchanger 42, respectively. By operating the control valves, the working fluids can be made to bypass the heat exchangers or diverted into the heat exchangers. This controlled circulation can meet varying demands of heating and refrigeration purposes.

Therefore, there can be two main heat components that can be produced in the tri-generation system 10, namely, heat from the first heat exchanger 42 (through the third fluid 48) and heat from the second heat exchanger 44 (through the fourth fluid 52). The two heat components may be directly used for heating purposes (such as for heating water, etc). The two heat components can also be used by the absorption chiller 46 for providing refrigeration or cooling. The absorption chiller 46 uses the heat either from the first heat exchanger 42 or second heat exchanger 44 or both and also rejects part or all of its condensation back into the condenser 38 of the second organic rankine cycle 14, represented by an arrow pointing from the absorption chiller 46 to the condenser 38.

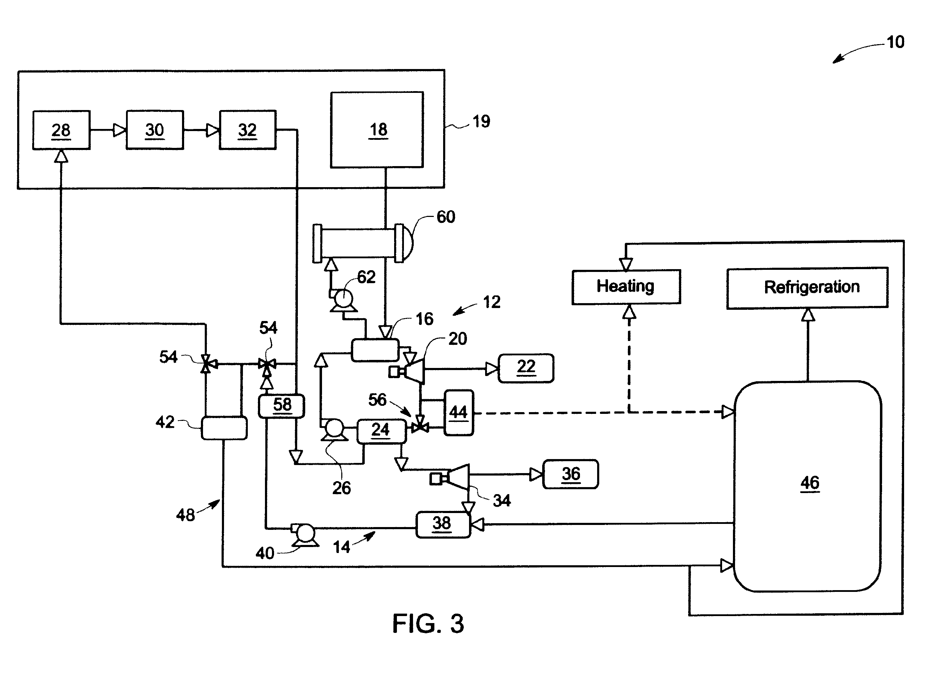

FIG. 3 illustrates the tri-generation system 10 operating in an exemplary operational mode. This figure shows an exemplary operational mode during spring or autumn season. The second heat exchanger 44 is not used in this mode. The first working fluid in the first organic rankine cycle 12 is bypassed from the second heat exchanger 44 by the second control valve 56. The second control valve diverts the first working fluid into the cascaded heat exchange unit 24. Therefore, the second heat exchanger 44 is inactivated and heat is not delivered by the second heat exchanger 44 (indicated by dashed lines). The first and second rankine cycles can be active and electricity is produced. The first control valves 54 divert the second working fluid into the first heat exchanger 42. Therefore, the first heat exchanger 42 is activated and heat is extracted by the third fluid 48 and delivered to absorption chiller 46, or for heating purposes, or both.

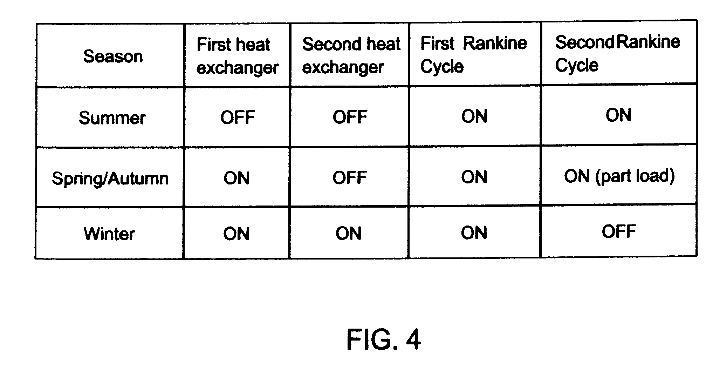

FIG. 4 shows exemplary operational modes that can be used with the tri-generation system according to different seasons. Spring or autumn mode is described with reference to FIG. 3. During summer, both the first and second heat exchangers can be inactive and the first and second rankine cycles are operational. The second control valve diverts the first working fluid into the cascaded heat exchange unit 24, bypassing the second heat exchanger. The first control valves divert the second working fluid into the second heat sources from the second organic rankine cycle, bypassing the first heat exchanger. During winter season, both the heat exchangers 42, 44 may be operated and the second organic rankine cycle system 14 may not be used to generate power. It should be noted that these are exemplary embodiments. A customer can choose to activate or deactivate the first heat exchanger or the second heat exchanger or both by operating control valves depending on electricity, heating, and refrigeration or cooling requirements. A customer can also choose to generate or not to generate electricity from first and second rankine cycles. The procedure for configuring the first and second rankine cycles to generate or not to generate electricity is described in appended Annex 1 entitled "COMBINED HEAT AND POWER CYCLE SYSTEM," filed herewith. Annex 1 is considered to be incorporated in its entirety into this disclosure.

The tri-generation system 10 described above thus provides a way for flexible generation of electricity, heating, and refrigeration or cooling. The tri-generation system combines a heat generation system such as an engine that generates electricity, a cascading organic rankine cycle engine (CORE), and an absorption chiller. The cascading organic rankine cycle engine includes a first organic rankine cycle, a second organic rankine cycle, and a cascaded heat exchange unit. Both the first and second organic rankine cycles can generate electricity. The heat exchangers of the tri-generation system can be selectively used to provide heat for heating purposes and for the absorption chiller. The combination of the engine, CORE, and absorption chiller enhances overall plant efficiency and increases economic benefits, especially in comparison to using individual installations for electricity, heating, and refrigeration or cooling.

It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A tri-generation system, comprising:
   a heat generation system comprising at least two separate heat sources having different temperatures;
   a first rankine cycle system comprising a first expander, wherein the first rankine cycle system is coupled to a first heat source among the at least two separate heat sources and configured to circulate a first working fluid to remove heat from the first heat source;
   a second rankine cycle system comprising a second expander, wherein the second rankine cycle system is coupled to at least one second heat source among the at least two separate heat sources and configured to circulate a second working fluid to remove heat from the at least one second heat source, the at least one second heat source comprising a lower temperature heat source than the first heat source;
   a cascaded heat exchange unit through which the first and second working fluids are circulated in heat exchange relationship for condensation of the first working fluid in the first rankine cycle system and evaporation of the second working fluid in the second rankine cycle system;
   at least one first heat exchanger coupled to the second rankine cycle system for heating a third fluid;
   at least one second heat exchanger disposed at one or more locations in the first rankine cycle system for heating a fourth fluid;
   an absorption chiller coupled to the at least one first heat exchanger and the at least one second heat exchanger for receiving the heated third fluid and the heated fourth fluid; and
   at least one generator unit coupled to the first expander and the second expander.
2. The system of clause 1, wherein the first working fluid comprises a first organic working fluid the second working fluid comprises a second organic working fluid.
3. The system of any preceding clause, wherein the second rankine cycle system comprises a condenser coupled to the at least one second heat source selected from a group comprising an oil heat exchanger, an engine jacket, a water jacket heat exchanger, a lower temperature intercooler, a higher temperature intercooler, or combinations thereof.
4. The system of any preceding clause, further comprising a partial evaporator, wherein the condenser is coupled to the oil heat exchanger, the engine jacket, the water jacket heat exchanger, the engine jacket, the lower temperature intercooler, the higher temperature intercooler, or combinations thereof through the partial evaporator that partially evaporates the second working fluid before entering the cascaded heat exchange unit.
5. The system of any preceding clause, wherein the at least one second heat exchanger is disposed at a location between an evaporator and the first expander.
6. The system of any preceding clause, wherein one or more locations in the first rankine cycle system comprises a location between an expander and the cascaded heat exchange unit.
7. The system of any preceding clause, wherein the at least one first heat exchanger is selectively activated and deactivated depending on the amount of heat required for heating the third fluid and the at least one second heat exchanger is selectively activated and deactivated depending on the amount of heat required for heating the fourth fluid.
8. The system of any preceding clause, wherein the first rankine cycle system and the second rankine cycle system are selectively activated and deactivated depending on the amount of power required.
9. The combined heat and power cycle system of any preceding clause, wherein the first working fluid comprises steam.
10. The recovery system of any preceding clause, wherein the first rankine cycle system further comprises an evaporator coupled to the first heat source, and wherein the first heat source comprises an engine exhaust unit.
11. The system of any preceding clause, further comprising a first control valve to control flow of the second working fluid into the at least one first heat exchanger.
12. The system of any preceding clause, further comprising a second control valve situated in the first rankine cycle system to control flow of the first working fluid into the at least one second heat exchanger and the cascaded heat exchange unit.
13. The system of any preceding clause, wherein the at least one first heat exchanger is disposed at a location between the second heat source and the absorption chiller.
14. The system of any preceding clause, wherein the first expander and the second expander are coupled a first generator unit and a second generator unit respectively.
15. The system of any preceding clause, wherein the heat generation system comprises a combustion engine, a gas turbine, or combination thereof.
16. The system of any preceding clause, wherein the heat generation system produces electricity, mechanical power, or combination thereof.
17. The system of any preceding clause, wherein the at least one first heat exchanger is disposed between the second heat source and the absorption chiller.
18. The system of any preceding clause, wherein the absorption chiller rejects a portion or all of the condensed third fluid back to the second rankine cycle system.
19. A tri-generation system, comprising:
   a heat generation system comprising at least two separate heat sources having different temperatures;
   a first organic rankine cycle system comprising a first expander, wherein the first rankine organic cycle system is coupled to a first heat source among the at least two separate heat sources and configured to circulate a first organic working fluid to remove heat from the first heat source;
   a second organic rankine cycle system comprising a second expander and a condenser, wherein the condenser is coupled to at least one second heat source among the at least two separate heat sources and configured to circulate a second organic working fluid to remove heat from the at least one second heat source, the at least one second heat source comprising a lower temperature heat source than the first heat source;
   a cascaded heat exchange unit through which the first and second working fluids are circulated in heat exchange relationship for condensation of the first organic working fluid in the first rankine cycle system and evaporation of the second organic working fluid in the second rankine cycle system;
   at least one first heat exchanger disposed coupled to the second rankine cycle system for heating a third fluid;
   at least one second heat exchanger disposed at one or more locations in the first rankine cycle system for heating a fourth fluid;
   an absorption chiller coupled to the at least one heat exchanger for receiving the heated third fluid and the heated fourth fluid, wherein the absorption chiller rejects a portion or all of the condensed third fluid back to the second rankine cycle system;
   at least one generator unit coupled to the first expander and the second expander; and
   one or more control valves to control flow of the first working fluid into the at least one first heat exchanger and the cascaded heat exchange unit, to control flow of the second working fluid into the at least one second heat exchanger, or combination thereof.
20. The system of any preceding clause, wherein the at least one second heat source comprises an oil heat exchanger, an engine jacket, a water jacket heat exchanger, a lower temperature intercooler, a higher temperature intercooler, or combinations thereof.
21. The system of any preceding clause, further comprising a partial evaporator, wherein the condenser is coupled to the oil heat exchanger, the engine jacket, the water jacket heat exchanger, the engine jacket, the lower temperature intercooler, the higher temperature intercooler, or combinations thereof through the partial evaporator that partially evaporates the second working fluid before entering the cascaded heat exchange unit.
22. The system of any preceding clause, wherein the at least one first heat exchanger is selectively activated and deactivated depending on the amount of heat required for heating the third fluid, the at least one second heat exchanger is selectively activated and deactivated depending on the amount of heat required for heating the fourth fluid, and the first rankine cycle system and the second rankine cycle system are selectively activated and deactivated depending on the amount of power required.
23. The recovery system of any preceding clause, wherein the first rankine cycle system further comprises an evaporator coupled to the first heat source, and wherein the first heat source comprises an engine exhaust unit.
24. The system of any preceding clause, wherein the heat generation system comprises a combustion engine or a gas turbine for producing electricity, mechanical power, or combination thereof.
25. A tri-generation system, comprising:
   a heat generation system comprising at least two separate heat sources having different temperatures, wherein the heat generation system comprises a combustion engine or a gas turbine for producing electricity, mechanical power, or combination thereof;
   a first organic rankine cycle system comprising a first expander and an evaporator, wherein the first rankine organic cycle system is coupled to a first heat source among the at least two separate heat sources and configured to circulate a first organic working fluid to remove heat from the first heat source;
   a second organic rankine cycle system comprising a second expander and a condenser, wherein the condenser is coupled to at least one second heat source among the at least two separate heat sources and configured to circulate a second organic working fluid to remove heat from the at least one second heat source, the at least one second heat source comprising a lower temperature heat source than the first heat source, wherein the at least one second heat source comprises an oil heat exchanger, an engine jacket, a water jacket heat exchanger, a lower temperature intercooler, a higher temperature intercooler, or combinations thereof;
   a cascaded heat exchange unit through which the first and second working fluids are circulated in heat exchange relationship for condensation of the first organic working fluid in the first rankine cycle system and evaporation of the second organic working fluid in the second rankine cycle system;
   at least one first heat exchanger disposed coupled to the second rankine cycle system for heating a third fluid;
   at least one second heat exchanger disposed at one or more locations in the first rankine cycle system for heating a fourth fluid;
   an absorption chiller coupled to the at least one heat exchanger for receiving the heated third fluid and the heated fourth fluid, wherein the absorption chiller rejects a portion or all of the condensed third fluid back to the second rankine cycle system;
   at least one generator unit coupled to the first expander and the second expander;
   one or more control valves to control flow of the first working fluid into the at least one first heat exchanger and the cascaded heat exchange unit, to control flow of the second working fluid into the at least one second heat exchanger, or combination thereof; and
   a partial evaporator that partially evaporates the second working fluid before entering the cascaded heat exchange unit, wherein the condenser is coupled to the oil heat exchanger, the engine jacket, the water jacket heat exchanger, the engine jacket, the lower temperature intercooler, the higher temperature intercooler, or combinations thereof through the partial evaporator.

## Claims

1. A tri-generation system (10), comprising:
a heat generation system comprising at least two separate heat sources having different temperatures;
a first rankine cycle (12) system comprising a first expander, wherein the first rankine cycle system is coupled to a first heat source among the at least two separate heat sources and configured to circulate a first working fluid to remove heat from the first heat source;
a second rankine cycle system (14) comprising a second expander, wherein the second rankine cycle system is coupled to at least one second heat source among the at least two separate heat sources and configured to circulate a second working fluid to remove heat from the at least one second heat source, the at least one second heat source comprising a lower temperature heat source than the first heat source;
a cascaded heat exchange unit (24) through which the first and second working fluids are circulated in heat exchange relationship for condensation of the first working fluid in the first rankine cycle system and evaporation of the second working fluid in the second rankine cycle system;
at least one first heat exchanger (20) coupled to the second rankine cycle system for heating a third fluid;
at least one second heat exchanger (24) disposed at one or more locations in the first rankine cycle system for heating a fourth fluid;
an absorption chiller coupled to the at least one first heat exchanger and the at least one second heat exchanger for receiving the heated third fluid and the heated fourth fluid; and
at least one generator unit coupled to the first expander and the second expander.

2. The system (10) of claim 1, wherein the first working fluid comprises a first organic working fluid the second working fluid comprises a second organic working fluid.

3. The system (10) of any preceding claim, wherein the second rankine cycle system (14) comprises a condenser (38) coupled to the at least one second heat source selected from a group comprising an oil heat exchanger, an engine jacket, a water jacket heat exchanger, a lower temperature intercooler, a higher temperature intercooler, or combinations thereof.

4. The system (10) of claim 3, further comprising a partial evaporator, wherein the condenser (38) is coupled to the oil heat exchanger (30), the engine jacket, the water jacket heat exchanger (32), the engine jacket, the lower temperature intercooler, the higher temperature intercooler, or combinations thereof through the partial evaporator that partially evaporates the second working fluid before entering the cascaded heat exchange unit.

5. The system (10) of any preceding claim, wherein the at least one second heat exchanger (30) is disposed at a location between an evaporator and the first expander.

6. The system (10) of any preceding claim, wherein one or more locations in the first rankine cycle system (12) comprises a location between an expander (20) and the cascaded heat exchange unit (24).

7. The system (10) of any preceding claim, wherein the at least one first heat exchanger (12) is selectively activated and deactivated depending on the amount of heat required for heating the third fluid and the at least one second heat exchanger (14) is selectively activated and deactivated depending on the amount of heat required for heating the fourth fluid.

8. The system (10) of any preceding claim, wherein the first rankine cycle system (12) and the second rankine cycle system (14) are selectively activated and deactivated depending on the amount of power required.

9. The recovery system (10) of any preceding claim, wherein the first rankine cycle (12) system further comprises an evaporator coupled to the first heat source, and wherein the first heat source comprises an engine exhaust unit.

10. The system (10) of any preceding claim, further comprising a first control valve to control flow of the second working fluid into the at least one first heat exchanger (20).

11. The system (10) of any preceding claim, further comprising a second control valve situated in the first rankine cycle system (12) to control flow of the first working fluid into the at least one second heat exchanger (24) and the cascaded heat exchange unit.

12. The system (10) of any preceding claim, wherein the at least one first heat exchanger (20) is disposed at a location between the second heat source and the absorption chiller.

13. The system (10) of any preceding claim, wherein the first expander (20) and the second expander (34) are coupled a first generator unit and a second generator unit respectively.

14. The system (10) of any preceding claim, wherein the at least one first heat exchanger (20) is disposed between the second heat source and the absorption chiller.

15. The system (10) of any preceding claim, wherein the absorption chiller rejects a portion or all of the condensed third fluid back to the second rankine cycle system (14).
